# EUROPEAN PATENT SPECIFICATION

(11) **EP 3 943 384 B1**
(45) Date of publication and mention of the grant of the patent: **29.03.2023**
(21) Application number: 20290055.1
(22) Date of filing: 21.07.2020
(51) Int. Cl.: B64C 13/50, B64C 1/00

(54) **PILOT CONTROL WITH MOVABLE SOFT STOPS**
PILOTSTEUERUNG MIT BEWEGLICHEN WEICHEN ANSCHLÄGEN
COMMANDE PILOTE COMPORTANT DES BUTÉES SOUPLES MOBILES

(43) Date of publication of application: 26.01.2022
(73) Proprietor: Ratier-Figeac SAS, 46101 Figeac Cedex (FR)
(72) Inventor: Antraygue, Cédric, 46101 Figeac Cedex (FR)
(74) Representative: Dehns

(56) References cited:
- EP-A1- 2 311 729
- WO-A2-03/040844
- GB-A- 2 569 851
- US-A1- 2002 135 327

## Description

### FIELD

This disclosure relates to systems and methods to implement adjustable soft stops in the force feel characteristic of an aircraft pilot control or any other pilot control.

### BACKGROUND

The load factor represents a global measure of the stress or load to which the structure of the aircraft is subjected. The load factor is the ratio of the lift of the aircraft to its weight. The lift of the aircraft is determined by factors that includes the wing geometry, the velocity of the aircraft as well as the angle with respect to the pitch axis. The load factor is affected by the orientation of the aircraft with respect to the roll axis. An excessive load factor may be problematic since it can result in damage to the aircraft or decrease the life potential of the aircraft. It is therefore useful to prevent the pilot from applying excessive bank, pitch and yaw angles when the aircraft is in flight in order to limit the magnitude of the load factor that an aircraft is subjected to. An example of a device dealing with such problem is disclosed in document US2002135327.

### SUMMARY

According to a first example described herein is a method for adjusting a soft stop position on a force-feel characteristic of a pilot control to move an aircraft. The method includes subtracting an actual aircraft variable from an aircraft limit parameter to find a difference, multiplying the difference by a gain factor to generate a soft stop position, and outputting the soft stop position for adjustment of the pilot control.

The method may further include, after finding the difference, applying a saturation to the difference.

Optionally, the actual aircraft variable is the bank angle of the aircraft and the limit parameter is the bank angle limit, and the pilot control moves an aircraft with respect to the roll axis. Alternatively, the actual aircraft variable is the load factor the aircraft is subjected to, the actual limit parameter is a load factor limit, and the pilot control moves an aircraft with respect to the pitch axis. Alternatively, the actual aircraft variable is a net lateral acceleration the aircraft is subjected to, the limit parameter is a net lateral acceleration limit, and the pilot control moves the rudder of the aircraft.

According to second example described herein is a system for adjusting a soft stop position on a force-feel characteristic of a pilot control to move an aircraft. The system comprises a pilot control to control the movement of the aircraft, a device configured to calculate a soft stop position and means for adjusting the pilot control such that the force-feel characteristic of the pilot control has a soft stop at the soft stop position. The device comprises means for receiving an actual aircraft variable and means for receiving an aircraft limit parameter. The device is configure to subtract the actual aircraft variable from the aircraft limit parameter to find a difference, multiply the difference by a gain factor to provide a soft stop position, and output the soft stop position for adjustment on the pilot control.

The device may be further configured to, after finding the difference, apply a saturation curve to the difference.

The device may comprise one or more analog components. Alternatively, the device may be a processor.

Optionally, the system may be configured such that the actual aircraft variable is the bank angle of the aircraft and the limit parameter is the bank angle limit, and the pilot control moves an aircraft with respect to the roll axis. Alternatively, the system may be configured such that the actual aircraft variable is the load factor the aircraft is subjected to, the actual limit parameter is a load factor limit, and the pilot control moves an aircraft with respect to the pitch axis. Alternatively, the system may be configured such that the actual aircraft variable is a net lateral acceleration the aircraft is subjected to, the limit parameter is a net lateral acceleration limit, and the pilot control moves the rudder of the aircraft.

Any combination of the systems described herein may be provided in an aircraft. The device may be embedded in the pilot control. Alternatively, the device may be remote to the pilot control.

### BRIEF DESCRIPTION OF THE DRAWINGS

Figure 1 shows the forces acting on an aircraft in flight when the aircraft has a bank angle.
Figure 2 shows the relationship between the bank angle and the load factor.
Figure 3 shows a classical static force feel characteristic for side stick control of rotation of an aircraft about the roll axis.
Figure 4 shows soft stops added to the classical static force feel characteristic of Figure 3.
Figure 5 shows an algorithm to implement soft stops according to the bank angle of the aircraft.
Figure 6 shows the method steps to implement soft stops according to the bank angle of the aircraft.
Figure 7 shows the forces acting on an aircraft according to the pitch angle.
Figure 8 shows the load factor envelope for a commercial aircraft.
Figure 9 shows soft stops added to the classical static force feel characteristic for rotation of an aircraft about the pitch axis.
Figure 10 shows an algorithm to implement soft stops according to the load factor on the aircraft.
Figure 11 shows the method steps to implement soft stops according to the load factor on the aircraft.
Figure 12 shows the forces acting on an aircraft when making a turn.
Figure 13 shows an algorithm to implement soft stops according to the net lateral acceleration of the aircraft.

### DETAILED DESCRIPTION

According to a first example described herein is an algorithm 10 for adjusting a soft stop position 7 on the force feel characteristic of a pilot control to control the orientation of an aircraft. The algorithm 10 has two inputs, an actual aircraft variable 1 and an aircraft limit parameter 2. The actual aircraft variable 1 can be determined in real time. The aircraft limit parameter 2 can be hard set or it can be adjusted based on flight conditions, such as the speed, altitude, or weight of the aircraft, as well as the position of the flaps of the wings, which can be extended or retracted.

The algorithm 10 performs the following steps:
Step a: The actual aircraft variable 1 is subtracted from the aircraft limit parameter 2 to find a difference 3.
Step e: Optionally, a saturation curve 4 is applied to the difference 3 between the actual aircraft parameter value 1 and the aircraft limit parameter 2 to provide a saturated value 5.
Step e can be performed if a limitation in the soft stop position is needed. The saturation curve 4 will set the difference 3 to a maximum value if it is above this maximum value, or it will set the difference 3 to a minimum value if it is below this minimum value.
Step b: If step e was performed, the saturated value 5 is multiplied by a factor 6 to provide a soft stop position 7. If step e was not performed, then the difference 3 is multiplied by a factor 6 to provide a soft stop position 7.
Step c: The soft stop position 7 is the output of the algorithm 10.

The algorithm 10 can be adapted to provide soft stops 7 suitable for movement with respect to different axes of orientation of the aircraft. For example, the algorithm 10 can be adapted in order to provide soft stop positions 7 that are suitable for controlling movement along the pitch, roll or yaw axis respectively. It can be desirable to provide soft stop positions 7 that can alert the pilot when excessive angles are being applied along any of the pitch, roll or yaw axis which may lead the aircraft to be subjected to an excessive load factor.

Also described herein is a system 100 with a device 120 configured to perform the steps of algorithm 10. The device 120 may comprise one or more analog components. Alternatively, the device 120 may be a digital processor. The system 100 can be configured so that a soft stop position 7 is calculated in real time. The device 120 may be part of the pilot control on the aircraft. Alternatively, the device 120 could be remote to the pilot control of the aircraft and embedded into another system of the aircraft.

According to a second example described herein is an algorithm 20 to provide an adjustable soft stop 17 for the control of the bank angle 11 of an aircraft with respect to the roll axis. The algorithm 20 is an adaption of the algorithm 10.

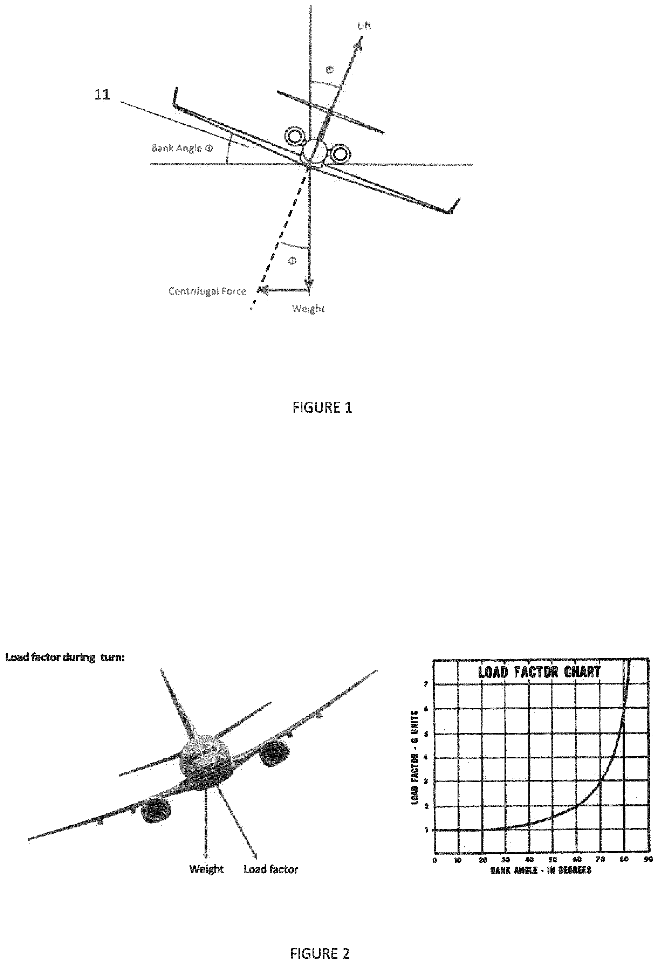

With reference to Figure 1, the bank angle 11 of an aircraft is the angle between the wings of the aircraft and the horizon. The bank angle 11 is determined with respect to the roll axis of the aircraft, which is the axis running from the nose to the tail of the plane. Figure 1 shows the forces acting on an aircraft in flight when the aircraft has a bank angle 11 of ø. The aircraft is subjected to forces that include the weight of the aircraft, the centrifugal force, and the lift. The load factor represents a global measure of the stress or load to which the structure of the aircraft is subjected. The load factor is defined as the ratio of the lift of an aircraft to its weight.

As shown in Figure 2, the load factor will increase in relation to an increase in the bank angle. When the aircraft makes a turn, the bank angle 11 and consequently the load factor will increase. For commercial aircraft, the bank angle limit 12 is 30 degrees and bank angle maximum is 60 degrees. In order to prevent an excessive load factor, it is useful to alert the pilot when the bank angle 11 is higher than a bank limit 12 of 30 degrees.

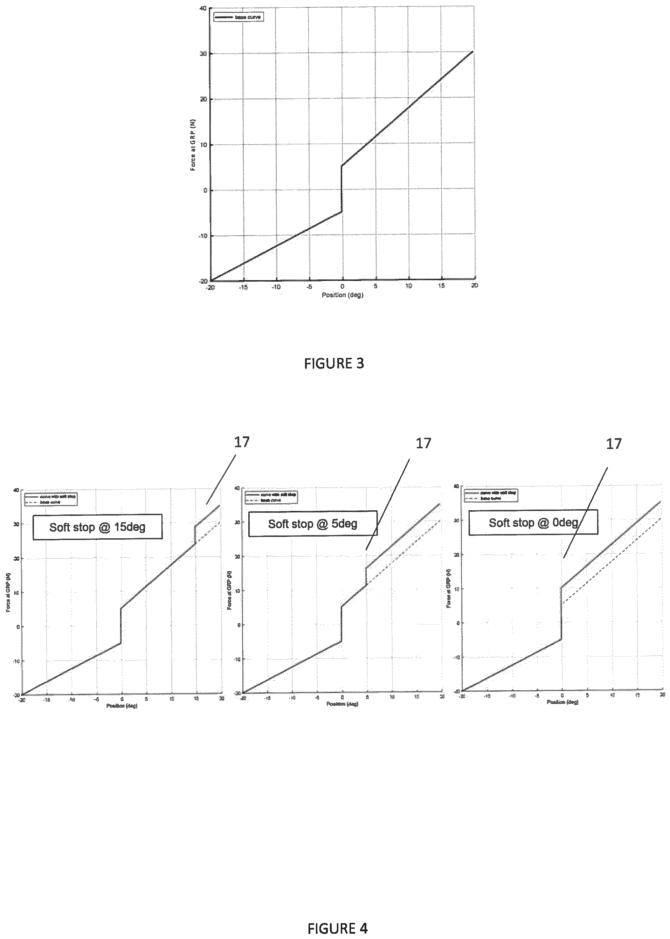

For most aircraft, the pilot controls the rotation of the aircraft about the roll axis by using a wheel or a central-stick or a side-stick. As an example, a side-stick for controlling the rotation of the aircraft about the roll axis will have a static force feel characteristic as shown in Figure 3, which shows the force feedback of the side-stick in N as a function of the position of the side-stick in degrees. Of course, it is envisaged that where a 'side-stick' is mentioned, a wheel or a central-stick may also be used as an alternative.

One way to provide the pilot with feedback regarding the position of the side-stick is to implement a soft stop 17 onto the classical force feel characteristic. A soft stop 17 is a stop which is felt but which can be overridden by the pilot. It can be used as a force cue to indicate to the pilot a given position of the side-stick. Examples of soft stops 17 added onto a classical force feel characteristic is shown in Figure 4. The left panel of Figure 4 shows a soft stop 17 implemented at 15 degrees. The middle panel of Figure 4 shows a soft stop implemented at 5 degrees. The right panel of Figure 4 shows a soft stop 17 implemented at 0 degrees.

The algorithm 20 described herein implements adjustable soft stops 17 to prevent the pilot from applying excessive bank angles 11. Unlike the previous examples shown in Figure 4, where the soft stops are implemented at fixed positions, the present algorithm 20 can calculate the soft stop position 17 in real time based on the actual aircraft bank angle 11 and a bank angle limit 12. The bank angle limit 12 can be hard set or can be adjusted based on flight conditions, such as the speed, altitude, and weight of the aircraft.

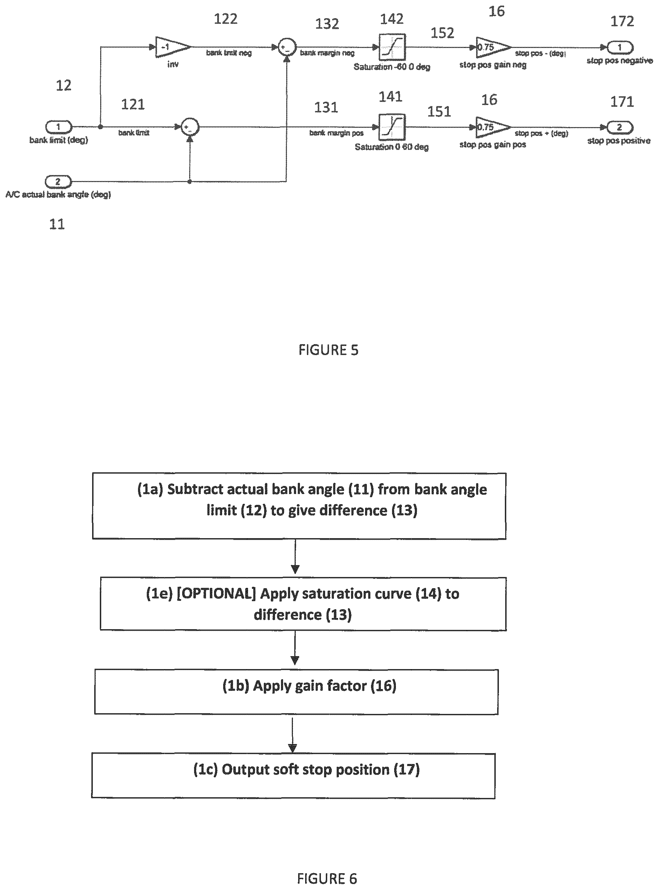

The algorithm 20 is shown in Figure 5. The inputs of the algorithm 20 are the actual bank angle 11 and the bank angle limit 12. The output of the algorithm 20 is the soft stop position 17.

Since an aircraft will have a positive bank angle limit 121 and a negative bank angle limit 122 relative to the neutral position, the algorithm 20 can be performed using the positive bank angle limit 121 as the bank angle limit 12 in order to output a positive soft stop position 171. The algorithm 20 can also be performed using the negative bank angle limit 122 as the bank angle limit 12 in order to output a negative soft stop position 172.

In the present example, the positive bank limit 121 has the same absolute value as the negative bank limit 122, and the positive bank limit 121 has the opposite sign to the negative bank limit 122. However, the algorithm 20 can also accommodate a positive bank limit 121 that has a different absolute value to the negative bank limit 122

With reference to Figures 5 and 6, the steps of the algorithm 20 are as follows:
Step 1a: The actual bank angle 11 is subtracted from the bank angle limit 12 (either the positive bank angle limit 121 or the negative bank angle limit 122) to result in difference 13.

In Figure 5, the difference between the positive bank angle limit 121 and the actual bank angle 11 results in difference 131, and the difference between the negative bank angle limit 122 and the actual bank angle 11 results in difference 132.

Step 1e: Optionally, a saturation curve 14 is applied to the difference 13 in order to provide a saturated value 15.

In Figure 5, saturation curve 141 is applied to difference 131 and a value 151 is output, and saturation curve 142 is applied to difference 132 and a value 152 is output.

In this example, the saturation is applied so that the position of soft stop is always in the side-stick roll travel quadrant corresponding to the turn side. This ensures that the soft stop is located between the neutral position and the hard stop position on the turn side. Other alternatives are also envisaged where the soft stop position can be located anywhere on the side-stick travel path. However, if the soft stop is positioned outside the side-stick travel path then it will not be felt by the pilot.

Step 1b: If step 1e was performed, the output of the saturation 15 is multiplied by a factor 16 to provide a soft stop position 17.

If step 1e was not performed, the difference 13 is multiplied by a factor 16 to provide a soft stop position 17.

The factor 16 can be function of the aircraft dynamics and roll flight controls gain. For example, if the aircraft is moving at a high speed, the magnitude of the factor 16 may be relatively small compared to when the aircraft is moving at a low speed.

Step 1e: The soft stop position 17 is output.

In Figure 5, the value 151 is multiplied by gain factor 16 and a positive soft stop position 171 is output. The value 152 is multiplied by gain factor 16 and a negative soft stop position 172 is output.

Also described herein is a system 200 with a device 220 configured to perform the steps of algorithm 20. The device 220 includes a means for receiving the bank angle 11 and a means for receiving the actual bank angle limit 12. The device 220 may comprise one or more analog components. Alternatively, the device 220 may be a digital processor. The system 200 can be configured so that a soft stop position 17 is calculated in real time. The device 220 may be part of the pilot control on the aircraft. Alternatively, the device 220 could be remote from the pilot control in the aircraft and embedded in another system of the aircraft. When the device 220 is remote from the pilot control, the soft stop position 17 is output through aircraft electronics to the pilot control to adjust the soft stop in the pilot control. The actual bank angle 11 can be determined by a bank angle sensor that is located inside the pilot controls. Alternatively, the actual bank angle 11 can be determined from the inertial sensors of the aircraft.

According to a third example described herein is an algorithm 30 to provide an adjustable soft stop 27 for the control of the pitch angle 21 of an aircraft with respect to the pitch axis. The algorithm 30 is an adaption of the algorithm 10.

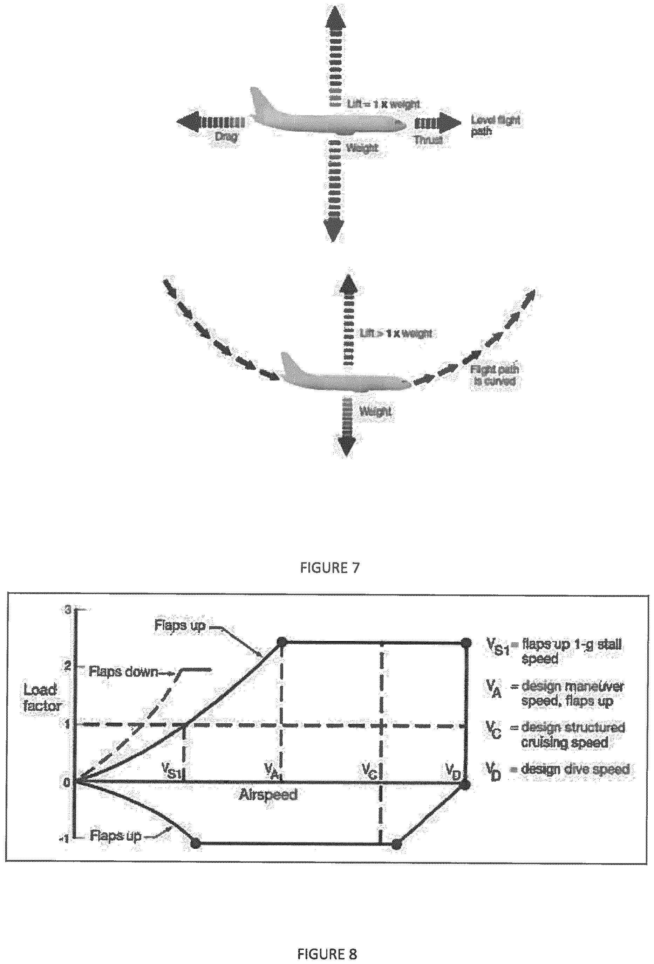

With reference to Figure 7, it can be seen that the forces acting on aircraft are affected by the pitch angle of an aircraft. When an aircraft has a level flight path, the lift on the aircraft is equal to its weight. When an aircraft has a curved flight path, the lift is greater than the weight. The pitch angle of an aircraft therefore affects the lift on the aircraft, and therefore the load factor, which, as described previously, is the ratio of the lift of the aircraft to the weight of the aircraft

Figure 8 shows a load factor envelope for a commercial aircraft. This is also known as a v-n diagram, which shows the velocity of the aircraft on the x-axis and the load factor in multiples of g on the y-axis. When the velocity of the aircraft is higher than Va, the pilot has the ability to create sufficient g loads to overstress the aircraft before a stall occurs. As is shown in Figure 8, for a commercial aircraft, the maximum load factor is in general between +2.5g to -1g when the flaps are retracted, and between +2g to 0g when the flaps are extended. If the aircraft is subjected to a load factor beyond these ranges, the aircraft structure may be damaged. It is therefore useful to alert the pilot when the load factor approaches these upper limits to prevent excessive structural stress.

The effect of the pitch angle on the load factor on an aircraft is as follows. If a negative angle is applied on the pitch control, (i.e. a back pressure), then the angle of attack increases and the load factor increases. If a positive angle on the pitch control is applied (i.e. a forward pressure), then the angle of attach reduces and the load factor decreases.

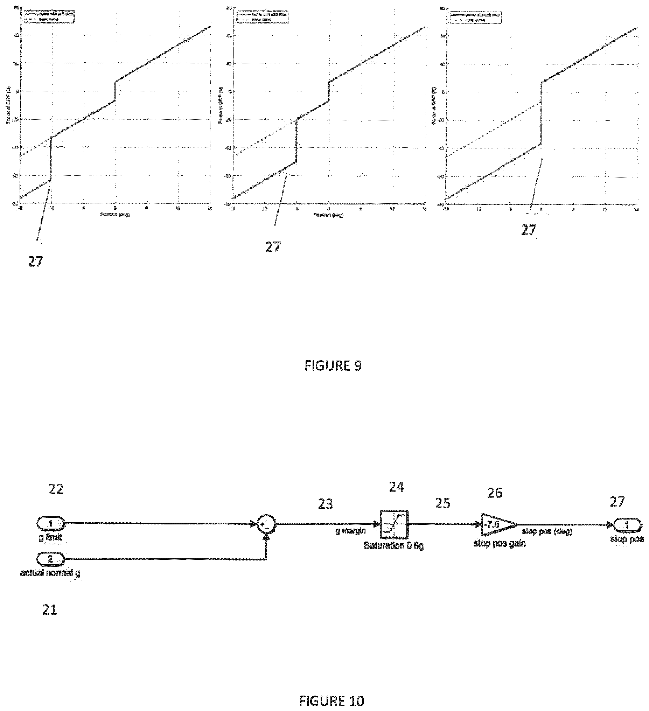

For most aircraft, the pilot controls the rotation of the aircraft about the pitch axis by using a wheel or a central-stick or a side-stick. As an example, a side-stick for controlling the rotation of the aircraft about the pitch axis will have a static force feel characteristic as shown in Figure 9. Of course, it is envisaged that where a 'side-stick' is mentioned, a wheel or a central-stick may also be used as an alternative.

As shown in Figure 9 and as previously described, static soft stops can be added onto the classical force feel characteristics.

The algorithm 30 described herein implements adjustable soft stops 27 to prevent the pilot from applying excessive pitch angles 21. Unlike the previous examples shown in Figure 10, where the soft stops are implemented at fixed positions, the present algorithm 30 can calculate the soft stop position 27 in real time based on the actual load factor 21 the aircraft is subjected to and a load factor limit 22.

The algorithm 30 is shown in Figure 10. The inputs of the algorithm 30 is the actual load factor 21 and the load factor limit 22. The output of the algorithm 30 is the soft stop position 27.

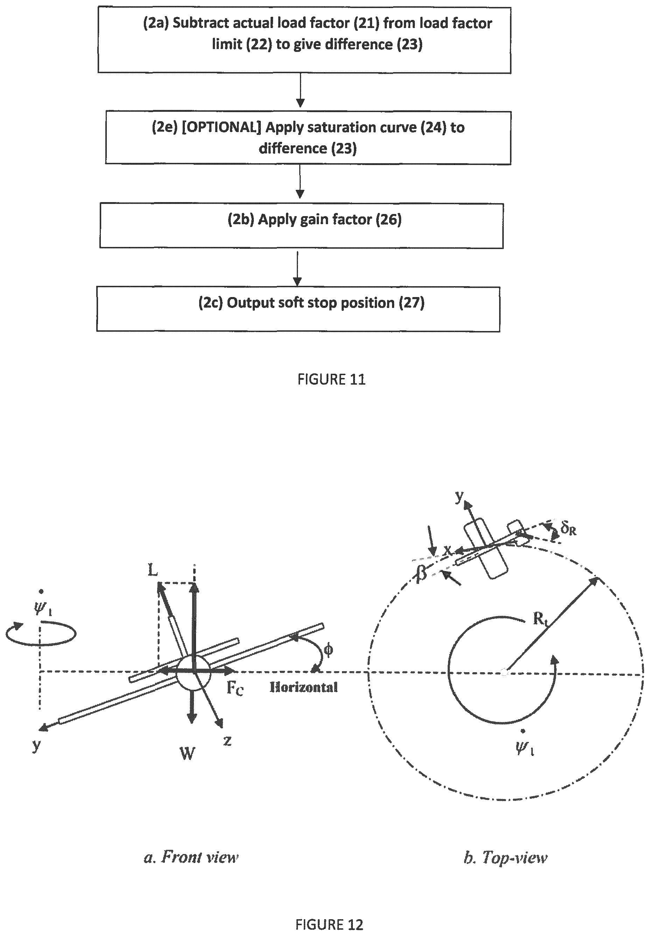

With reference to Figure 11, the steps of the algorithm 30 are as follows:
Step 2a: The actual load factor 21 is subtracted from the load factor limit 22 to determine the difference 23 between the actual load factor 21 and the load factor limit 22.
Step 2e: Optionally, a saturation curve 24 is applied to the difference 23 to provide a saturated value 25.

In this example, a saturation curve 24 is provided so that the position of soft stop 27 is always in the side- stick travel quadrant corresponding to the nose up side (soft stop located between neutral position (included) and hard stop position). However, other examples are envisaged where the soft stop 27 can be implemented at any point on the side-stick travel path.

Step 2b: If step 2e was performed, the saturated value 25 is multiplied by a factor 26 to provide a soft stop position 27.

If step 2e was not performed, the difference 23 is multiplied by a factor 26 to provide a soft stop position 27.

The factor 26 can be a function of the aircraft dynamics and the pitch flight controls gain. For example, if the aircraft is moving at a high speed then the magnitude of the factor will be relatively small compared to when the aircraft ins moving at a low speed.

Step 2c: The soft stop position 27 is output.

Also described herein is a system 300 with a device 320 configured to perform the steps of algorithm 30. The device 320 includes a means for receiving the actual load factor 21 and a means for receiving the actual load factor limit 22. The device 320 may comprise one or more analog components. Alternatively, the device 320 may be a digital processor. The system 300 can be configured so that a soft stop position 27 is calculated in real time. The system 300 may be part of the pilot control on the aircraft. Alternatively, the system 300 could be remote from the pilot control and embedded in another system of the aircraft. When the system 300 is remote from the pilot control, the soft stop position 27 is output through aircraft electronics to the pilot control to adjust the soft stop in the pilot control. The actual load factor 21 can be determined by an acceleration sensor inside the pilot controls. Alternatively, the actual load factor 21 can be determined from the inertial sensors of the aircraft.

The benefits of system 300 is that as soon as the actual load factor 21 changes, the soft stop position 27 is dynamically adjusted so that the pilot feels the side-stick angle which would lead the aircraft to be subjected to an excessive load factor.

According to fourth example described herein is an algorithm 40 to provide an adjustable soft stop 37 for the control of the yaw of an aircraft with respect to the yaw axis. The algorithm 40 is an adaption of the algorithm 10.

With reference to Figure 12, it can be seen that when an aircraft makes a turn, the aircraft rotates with respect to the roll axis and the yaw axis. The turn operation is coordinated by ailerons that bank the aircraft with respect to the roll axis. The turn operation is also coordinated by the rudder, which rotates the aircraft with respect to the yaw axis. A coordinated level turn is defined as a turn where the components of forces along the aircraft body-fixed y-axis sum to zero. In addition, it is desired that the aerodynamic side force (FAy) is equal to zero. It is desirable for the components of forces along the aircraft body-fixed y-axis to sum to zero since this results in no net lateral acceleration (i.e. no skidding I no slipping) which ensures passenger comfort.

For most aircraft, the pilot controls the rudder by using rudder pedals or a third axis of a side-stick.

Similar to previous examples, the control of the rudder pedal or the third axis of a side stick has a force-feel characteristic. The force-feel characteristic can be altered by adding soft stops.

The algorithm 40 described herein implements adjustable soft stops 37 to the force-feel characteristic of the rudder pedal or the third axis of a side-stick in to prevent the pilot from moving the rudder to a position that would result in an undesirable level of net lateral acceleration. The algorithm 40 can calculate the soft stop position 37 in real time based on the actual lateral acceleration 31 of the aircraft and a lateral acceleration limit 32.

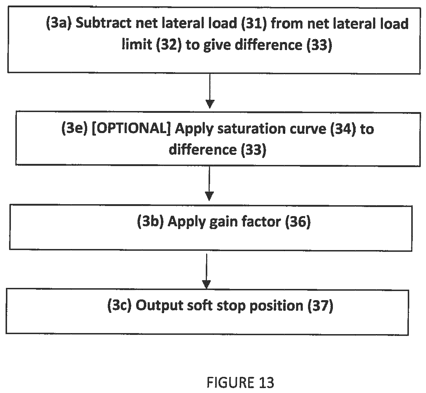

The algorithm 40 is shown in Figure 13. The inputs of the algorithm 40 are the actual lateral acceleration 31 and the lateral acceleration limit 32. The output of the algorithm 40 is the soft stop position 37.

If it is desired that there is no net lateral acceleration of the aircraft, the lateral acceleration limit 32 can be set to zero. Alternatively, it may be desired that excessive rudder inputs are avoided as this can either lead to damage of the aircraft structure or can result in rudder reversal. If it is desired that excessive rudder inputs are avoided, a lateral acceleration limit 32 of 0.5g may be chosen for a typical commercial aircraft. If it is desired that rudder reversal is avoided, a lateral acceleration limit 32 of 1g may be chosen for a typical commercial aircraft.

With reference to Figure 13, the steps of the algorithm 30 are as follows:
Step 3a: The actual lateral acceleration 31 is subtracted from the lateral acceleration limit 32 to determine the difference 33 between the actual lateral acceleration 31 and the actual lateral acceleration limit 32.
Step 3e: Optionally, a saturation curve 34 is applied to the difference 33 to provide a saturated value 35.
Step 3b: If step 3e was performed, the saturated value 35 is multiplied by a factor 36 to provide a soft stop position 37.

If step 3e was not performed, the difference 33 is multiplied by a factor 36 to provide a soft stop position 37.

The factor 36 can be a function of the aircraft dynamics and the rudder flight controls gain. For example, if the aircraft is moving at a high speed, the magnitude of the factor 36 may be relatively small compared to when the aircraft is moving at a low speed.

Step 3c: The soft stop position 37 is output.

Also described herein is a system 400 with a device 420 configured to perform the steps of algorithm 40. The device 420 includes a means for receiving the actual lateral acceleration 31 and a means for receiving the actual load factor limit 32. The device 420 may comprise one or more analog components. Alternatively, the device 420 may be a digital processor. The system 400 can be configured so that a soft stop position 37 is calculated in real time. The device 430 may be part of the pilot control on the aircraft. Alternatively, the device 420 could be remote from the pilot control and embedded in another system of the aircraft. When the device 420 is remote from the pilot control, the soft stop position 37 is output through aircraft electronics to the pilot control to adjust the soft stop in the pilot control. The actual lateral acceleration 31 can be determined by an acceleration sensor inside the pilot controls. Alternatively, the actual lateral acceleration 21 can be determined from the inertial sensors of the aircraft.

The benefits of system 400 is that as soon as the actual lateral acceleration 31 changes, the soft stop position 37 is dynamically adjusted so that the pilot feels the side-stick angle or rudder pedal position which would lead the aircraft to be subjected to an excessive lateral acceleration.

Each one of the algorithms 10, 20, 30, 40 described herein can be implemented on aircraft either individually or in combination with one or two or three of the remaining algorithms.

Each one of the systems 100, 200, 300, 400 described herein can be implemented on aircraft either individually or in combination with one or two or three of the remaining systems.

All of the adjustable soft stops described herein can be implemented by an active side-stick or active pilot controls. In these instances, the force feel characteristic of the side-stick is electronically generated by motors. It is also envisaged that the adjustable soft stop can be implemented into a passive pilot control through a dedicated mechanism.

The advantages of implementing adjustable soft stops as described herein is that the pilot is provided with better awareness of the load factor that the aircraft is subjected to. This can result in increased safety when flying. In addition, by providing means to encourage the pilot to limit the load factor, the aircraft can have better longevity and lower maintenance costs are needed.

Although this disclosure has been described in terms of preferred examples, it should be understood that these examples are illustrative only and that the claims are not limited to those examples. Those skilled in the art will be able to make modifications and alternatives in view of the disclosure which are contemplated as falling within the scope of the appended claims.

## Claims

1. A method (10) for adjusting a soft stop position on a force-feel characteristic
of a pilot control to move an aircraft, the method comprising:
step (a): subtracting an actual aircraft variable (1) from an aircraft limit parameter (2) to find a difference (3);
step (b): multiplying the difference (3) by a gain factor (6) to generate a soft stop position (7);
step (c): outputting the soft stop position for adjustment on the pilot control.

2. The method (10) of claim 1, further comprising, after performing step (a) and before performing step (b):
applying a saturation curve (4) to the difference (3).

3. The method (20) of any preceding claim, wherein the actual aircraft variable (11) is the bank angle of the aircraft, wherein the limit parameter (12) is a bank angle limit, and wherein the pilot control moves an aircraft with respect to the roll axis.

4. The method (30) of any claims 1 or 2, wherein the actual aircraft variable (21) is the load factor the aircraft is subjected to, wherein the actual limit parameter (22) is a load factor limit, and wherein the pilot control moves an aircraft with respect to the pitch axis.

5. The method (40) of any claims 1 or 2, wherein the actual aircraft variable (31) is the net lateral acceleration the aircraft is subjected to, wherein the limit parameter (32) is a net lateral acceleration limit, and wherein the pilot control moves the rudder of the aircraft.

6. A system (100) for adjusting a soft stop position (7) on a force-feel characteristic of a pilot control to move an aircraft, the system comprising:
a pilot control to control the movement of the aircraft;
a device (120) configured to calculate a soft stop position; and
means for adjusting the pilot control such that the force-feel characteristic of the pilot control has a soft stop at the soft stop position (7);
**characterised in that**:
the device (120) comprises:
means for receiving an actual aircraft variable (1);
means for receiving an aircraft limit parameter (2);
and wherein the device (120) is configured to perform the following steps:
step (a): subtract an actual aircraft variable (1) from an aircraft limit parameter (2) to find a difference (3);
step (b): multiply the difference (3) by a gain factor (6) to provide a soft stop position (7); and
step (c): output the soft stop position (7) for adjustment on the pilot control.

7. The system (100) of claim 6, wherein the device (120) is further configured to, after performing step (a) and before performing step (b):
apply a saturation curve (4) to the difference (3).

8. The system (100) of any one of claims 6 and 7, wherein the device (120) comprises one or more analog components.

9. The system (100) of any one of claims 6 and 7, wherein the device (120) is a processor.

10. The system (100, 200) of any one of claims 6 to 9, wherein the actual aircraft variable (1, 11) is a bank angle of the aircraft, wherein the limit parameter (2, 12) is a bank angle limit, and wherein the pilot control moves the aircraft with respect to the roll axis.

11. The system (100, 300) of any one of claims 6 to 9, wherein the actual aircraft variable (1, 21) is a load factor the aircraft is subjected to, wherein the actual limit parameter (2, 22) is a load factor limit, and wherein pilot control moves the aircraft with respect to the pitch axis.

12. The system (100, 400) of any one of claims 6 to 9, wherein the actual aircraft variable (1, 31) is a net lateral acceleration the aircraft is subjected to, wherein the limit parameter (2, 32) is a net lateral acceleration limit, and wherein the pilot control moves the rudder of the aircraft.

13. An aircraft comprising the system (100, 200, 300, 400) of any one of claims 6 to 12, wherein the device (120) is embedded in the pilot control.

14. An aircraft comprising the system (100, 200, 300, 400) of any one of claims 6 to 12, wherein the device (120) is remote to the pilot control.

## Patentansprüche

1. Verfahren (10) zum Einstellen einer Position mit weichem Anschlag auf einer Kraft-Gefühls-Charakteristik einer Pilotsteuerung, um ein Luftfahrzeug zu bewegen, wobei das Verfahren umfasst:
Schritt (a): Subtrahieren einer aktuellen Luftfahrzeugvariablen (1) von einem Luftfahrzeuggrenzparameter (2), um eine Differenz (3) zu finden;
Schritt (b): Multiplizieren der Differenz (3) mit einem Verstärkungsfaktor (6), um eine Position mit weichem Anschlag (7) zu generieren;
Schritt (c): Ausgeben der Position mit weichem Anschlag zur Einstellung auf der Pilotsteuerung.

2. Verfahren (10) nach Anspruch 1, das ferner nach dem Durchführen von Schritt (a) und vor dem Durchführen von Schritt (b) umfasst:
Anwenden einer Sättigungskurve (4) auf die Differenz (3).

3. Verfahren (20) nach einem vorstehenden Anspruch, wobei die aktuelle Luftfahrzeugvariable (11) der Querneigungswinkel des Luftfahrzeugs ist, wobei der Grenzparameter (12) eine Querneigungswinkelgrenze ist und wobei die Pilotsteuerung ein Luftfahrzeug in Bezug auf die Rollachse bewegt.

4. Verfahren (30) nach Anspruch 1 oder 2, wobei die aktuelle Luftfahrzeugvariable (21) der Lastfaktor ist, dem das Luftfahrzeug unterliegt, wobei der aktuelle Grenzparameter (22) eine Lastfaktorgrenze ist und wobei die Pilotsteuerung ein Luftfahrzeug in Bezug auf die Nickachse bewegt.

5. Verfahren (40) nach Anspruch 1 oder 2, wobei die aktuelle Luftfahrzeugvariable (31) die Nettoquerbeschleunigung ist, der das Luftfahrzeug unterliegt, wobei der Grenzparameter (32) eine Nettoquerbeschleunigungsgrenze ist und wobei die Pilotsteuerung das Seitenruder des Luftfahrzeugs bewegt.

6. System (100) zum Einstellen einer Position mit weichem Anschlag (7) auf einer Kraft-Gefühls-Charakteristik einer Pilotsteuerung, um ein Luftfahrzeug zu bewegen, wobei das System umfasst:
eine Pilotsteuerung zum Steuern der Bewegung des Luftfahrzeugs;
eine Vorrichtung (120), die dazu konfiguriert ist, eine Position mit weichem Anschlag zu berechnen; und
Mittel zum Einstellen der Pilotsteuerung derart, dass die Kraft-Gefühls-Charakteristik der Pilotsteuerung einen weichen Anschlag an der Position mit weichem Anschlag (7) aufweist;
**dadurch gekennzeichnet, dass**:
die Vorrichtung (120) umfasst:
Mittel zum Empfangen einer aktuellen Luftfahrzeugvariablen (1);
Mittel zum Empfangen eines Luftfahrzeuggrenzparameters (2);
und wobei die Vorrichtung (120) dazu konfiguriert ist, die folgenden Schritte durchzuführen:
Schritt (a): Subtrahieren einer aktuellen Luftfahrzeugvariablen (1) von einem Luftfahrzeuggrenzparameter (2), um eine Differenz (3) zu finden;
Schritt (b): Multiplizieren der Differenz (3) mit einem Verstärkungsfaktor (6), um eine Position mit weichem Anschlag (7) bereitzustellen; und
Schritt (c): Ausgeben der Position mit weichem Anschlag (7) zur Einstellung auf der Pilotsteuerung.

7. System ( 100 ) nach Anspruch 6, wobei die Vorrichtung (120) ferner dazu konfiguriert ist, nach dem Durchführen von Schritt (a) und vor dem Durchführen von Schritt (b):
eine Sättigungskurve (4) auf die Differenz (3) anzuwenden.

8. System (100) nach einem der Ansprüche 6 und 7, wobei die Vorrichtung (120) eine oder mehrere analoge Komponenten umfasst.

9. System (100) nach einem der Ansprüche 6 und 7, wobei die Vorrichtung (120) ein Prozessor ist.

10. System (100, 200) nach einem der Ansprüche 6 bis 9, wobei die aktuelle Luftfahrzeugvariable (1, 11) ein Querneigungswinkel des Luftfahrzeugs ist, wobei der Grenzparameter (2, 12) eine Querneigungswinkelgrenze ist und wobei die Pilotsteuerung das Luftfahrzeug in Bezug auf die Rollachse bewegt.

11. System (100, 300) nach einem der Ansprüche 6 bis 9, wobei die aktuelle Luftfahrzeugvariable (1, 21) ein Lastfaktor ist, dem das Luftfahrzeug unterliegt, wobei der aktuelle Grenzparameter (2, 22) eine Lastfaktorgrenze ist und wobei die Pilotsteuerung das Luftfahrzeug in Bezug auf die Nickachse bewegt.

12. System (100, 400) nach einem der Ansprüche 6 bis 9, wobei die aktuelle Luftfahrzeugvariable (1, 31) eine Nettoquerbeschleunigung ist, der das Luftfahrzeug unterliegt, wobei der Grenzparameter (2, 32) eine Nettoquerbeschleunigungsgrenze ist und wobei die Pilotsteuerung das Seitenruder des Luftfahrzeugs bewegt.

13. Luftfahrzeug, das das System (100, 200, 300, 400) nach einem der Ansprüche 6 bis 12 umfasst, wobei die Vorrichtung (120) in die Pilotsteuerung eingebettet ist.

14. Luftfahrzeug, das das System (100, 200, 300, 400) nach einem der Ansprüche 6 bis 12 umfasst, wobei die Vorrichtung (120) von der Pilotsteuerung entfernt ist.

## Revendications

1. Procédé (10) de réglage d'une position de butée souple sur une caractéristique de sensation de force d'une commande pilote pour déplacer un aéronef, le procédé comprenant :
étape (a) : la soustraction d'une variable réelle d'aéronef (1) d'un paramètre limite d'aéronef (2) pour trouver une différence (3) ;
étape (b) : la multiplication de la différence (3) par un facteur de gain (6) pour générer une position de butée souple (7) ;
étape (c) : la sortie de la position de butée souple pour réglage sur la commande pilote.

2. Procédé (10) selon la revendication 1, comprenant en outre, après la réalisation de l'étape (a) et avant la réalisation de l'étape (b) :
l'application d'une courbe de saturation (4) à la différence (3) .

3. Procédé (20) selon une quelconque revendication précédente, dans lequel la variable réelle d'aéronef (11) est l'angle d'inclinaison de l'aéronef, dans lequel le paramètre limite (12) est une limite d'angle d'inclinaison, et dans lequel la commande pilote déplace un aéronef par rapport à l'axe de roulis.

4. Procédé (30) selon l'une quelconque des revendications 1 ou 2, dans lequel la variable réelle d'aéronef (21) est le facteur de charge auquel l'aéronef est soumis, dans lequel le paramètre limite réel (22) est une limite de facteur de charge, et dans lequel la commande pilote déplace un aéronef par rapport à l'axe de tangage.

5. Procédé (40) selon l'une quelconque des revendications 1 ou 2, dans lequel la variable réelle d'aéronef (31) est l'accélération latérale nette à laquelle l'aéronef est soumis, dans lequel le paramètre limite (32) est une limite d'accélération latérale nette, et dans lequel la commande pilote déplace la gouverne de direction de l'aéronef.

6. Système (100) de réglage d'une position de butée souple (7) sur une caractéristique de sensation de force d'une commande pilote pour déplacer un aéronef, le système comprenant :
une commande pilote pour commander le mouvement de l'aéronef ;
un dispositif (120) configuré pour calculer une position de butée souple ; et
un moyen pour régler la commande pilote de sorte que la caractéristique de sensation de force de la commande pilote dispose d'une butée souple à la position de butée souple (7) ;
**caractérisé en ce que** :
le dispositif (120) comprend :
un moyen pour recevoir une variable réelle d'aéronef (1) ;
un moyen pour recevoir un paramètre limite d'aéronef (2) ;
et dans lequel le dispositif (120) est configuré pour réaliser les étapes suivantes :
étape (a) : soustraire une variable réelle d'aéronef (1) d'un paramètre limite d'aéronef (2) pour trouver une différence (3) ;
étape (b) : multiplier la différence (3) par un facteur de gain (6) pour fournir une position de butée souple (7) ; et
étape (c) : sortir la position de butée souple (7) pour réglage sur la commande pilote.

7. Système (100) selon la revendication 6, dans lequel le dispositif (120) est en outre configuré pour, après la réalisation de l'étape (a) et avant la réalisation de l'étape (b) :
appliquer une courbe de saturation (4) à la différence (3).

8. Système (100) selon l'une quelconque des revendications 6 et 7, dans lequel le dispositif (120) comprend un ou plusieurs composants analogiques.

9. Système (100) selon l'une quelconque des revendications 6 et 7, dans lequel le dispositif (120) est un processeur.

10. Système (100, 200) selon l'une quelconque des revendications 6 à 9, dans lequel la variable réelle d'aéronef (1, 11) est un angle d'inclinaison de l'aéronef, dans lequel le paramètre limite (2, 12) est une limite d'angle d'inclinaison, et dans lequel la commande pilote déplace l'aéronef par rapport à l'axe de roulis.

11. Système (100, 300) selon l'une quelconque des revendications 6 à 9, dans lequel la variable réelle d'aéronef (1, 21) est un facteur de charge auquel l'aéronef est soumis, dans lequel le paramètre limite réel (2, 22) est une limite de facteur de charge, et dans lequel la commande pilote déplace l'aéronef par rapport à l'axe de tangage.

12. Système (100, 400) selon l'une quelconque des revendications 6 à 9, dans lequel la variable réelle d'aéronef (1, 31) est une accélération latérale nette à laquelle l'aéronef est soumis, dans lequel le paramètre limite (2, 32) est une limite d'accélération latérale nette, et dans lequel la commande pilote déplace la gouverne de direction de l'aéronef.

13. Aéronef comprenant le système (100, 200, 300, 400) selon l'une quelconque des revendications 6 à 12, dans lequel le dispositif (120) est intégré dans la commande pilote.

14. Aéronef comprenant le système (100, 200, 300, 400) selon l'une quelconque des revendications 6 à 12, dans lequel le dispositif (120) est distant de la commande pilote.
